# DEMANDE DE BREVET EUROPEEN

(11) **EP 3 372 917 A1**
(43) Date de publication de la demande: **12.09.2018**
(21) Numéro de dépôt: 17020123.0
(22) Date de dépôt: 29.03.2017
(51) Int. Cl.: F24J 2/02, H02S 40/00, F24C 7/10

(54) **PLAQUE CHAUFFANTE SOLAIRE**

(30) Priorité: 06.03.2017 FR 1770214
(71) Demandeur: Zambo Bedos, Simplice, 91230 Montgeron (FR)
(72) Inventeur: Zambo Bedos, Simplice, 91230 Montgeron (FR)

(57) **Abrégé**

Puissance de la grande plaque 1500W. Puissance de la petite plaque : 1000W.

Finition en acier inoxydable durable et facile à nettoyer. Protection anti-surchauffe. Résistant à la corrosion.

Ajustement de la chaleur contrôlé par thermostat. Indications de puissance par néon individuel. Pieds en caoutchouc antidérapants pour protéger la surface de la chaleur. Les poignées incluses permettent de garantir la sécurité de l'utilisateur. Les pieds antidérapants garantissent la stabilité de la plaque chauffante solaire et l'espace supplémentaire en-dessous des plaques permet une meilleure dissipation de la chaleur. Plaques en fonte qui chauffent et refroidissent rapidement et efficacement. Thermostat variable pour vous laisser le contrôle de la température.

## Description

### La plaque chauffante solaire :

Permet de capter au maximum les rayons du soleil pour chauffer rapidement la plaque en utilisant le principe de la concentration des rayons. Toute l'énergie du soleil se concentre sur la plaque chauffante solaire. Pas de dégagement de fumée, ni CO2, vous utilisez une énergie gratuite, Ecologique, Economique, la plaque chauffante solaire s'inscrit sans conteste dans la voie du développement durable.

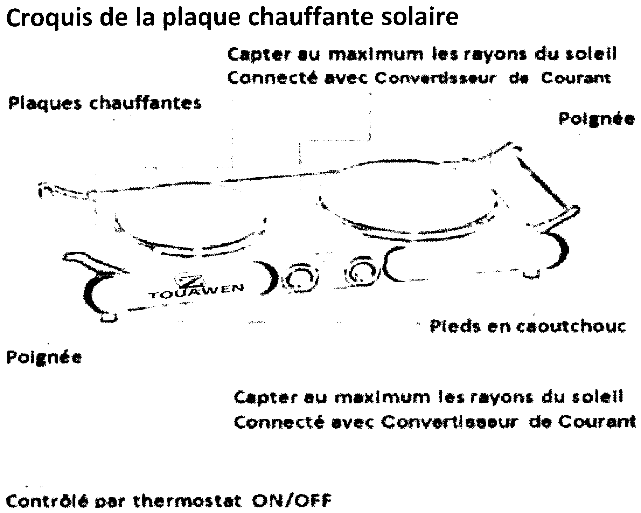

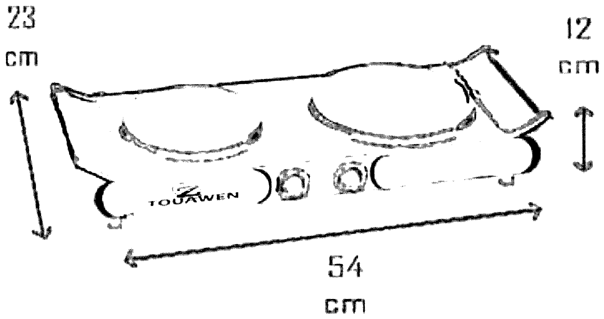

## Revendications

1. panneau solaire 12 Volts
1- batterie rechargeable de 12 Volts 12 Ah
1- régulateur économique 4 Ampères 12 Volts
1- convertisseur de tension 12V/230V
1.1 -Tension nominale d'entrée : 12V
1.2 -Tension de sortie : 220-230 V
Température de fonctionnement : -15 (avec la batterie) à 45°C
Protection surchauffe : oui
Protection surcharge : oui

## Revendications modifiées

### Revendications modifiées conformément à la règle 137(2) CBE.

1. Plaque chauffante solaire comportant :
- au moins un panneau solaire intégré
- en son sein une batterie rechargeable
- en son sein un convertisseur de tension de 12 v à 220-230v
- en son sein un régulateur économique de 4 Ampères à 12Volts

2. Plaque chauffante solaire selon la revendication 1 **caractérisée en ce qu'**elle comporte deux plaques en fonte qui chauffent en état ON(5) et refroidissent en peu de temps en état OFF(5).

3. Plaque chauffante solaire selon la revendication 1 ou 2 **caractérisée en ce qu'**elle comporte un Thermostat pour contrôler la température de chauffe, une Protection anti - surchauffe résistant à la corrosion, une protection surcharge, et une Indication de puissance par néon individuel

4. Plaque chauffante solaire selon l'une quelconque des revendications précédentes est configurée pour définir la puissance maximum de 2500W dont la Puissance de la grande plaque est de 1500W et la puissance de la petite plaque : 1000W.

5. Plaque chauffante solaire selon l'une quelconque des revendications précédentes **caractérisée en ce qu'**elle comporte des pieds antidérapants qui garantissent la stabilité, les poignées incluses permettent de garantir la sécurité de l'utilisateur.

6. Plaque chauffante solaire selon l'une quelconque des revendications précédentes **caractérisée en ce qu'**elle comporte une finition en acier inoxydable facilitant le nettoyage.

7. Plaque chauffante solaire selon l'une quelconque des revendications **caractérisée en ce qu'**elle comporte un interrupteur(5) ON/OFF pour allumer et éteindre.
